# FASCICULE DE BREVET EUROPEEN

(11) **EP 1 280 646 B1**
(45) Date de publication et mention de la délivrance du brevet: **22.10.2003**
(21) Numéro de dépôt: 01917169.3
(22) Date de dépôt: 16.03.2001
(51) Int. Cl.: B29C 45/36, B29C 45/33, B29C 45/26

(54) **MOULE POUR L'INJECTION D'UN TUBE SOUPLE ET PROCEDE D'INJECTION**
FORM ZUM SPRITZGIESSEN EINES FLEXIBLEN ROHRES UND SPRITZGIESSVERFAHREN
MOULD FOR INJECTION MOULDING OF A FLEXIBLE TUBE AND INJECTION MOULDING METHOD

(30) Priorité: 17.03.2000 FR 0003468
(43) Date de publication de la demande: 05.02.2003
(73) Titulaire: CEP Industrie, 63550 Saint Rémy sur Durolle (FR)
(72) Inventeur: DAMBRICOURT, Géry, F-63300 Escoutoux (FR)
(74) Mandataire: Berger, Helmut
(86) Numéro de dépôt international: FR0100799
(87) Numéro de publication internationale: WO01068347

(56) Documents cités:
- WO-A-86/04856
- DE-A- 1 925 674
- DE-B- 1 166 457
- DE-C- 4 318 014
- FR-A- 1 066 799
- FR-A- 1 531 148
- FR-A- 2 791 635
- US-A- 3 314 105

## Description

La présente invention concerne, de façon générale, les techniques d'injection de corps creux tels que ceux qui sont réalisés en matériaux thermoplastiques.

Plus précisément l'invention concerne, suivant l'un de ses aspects, un moule pour l'injection d'un tube présentant une douille de distribution surmontant un col qui s'évase radialement jusqu'à une jupe tubulaire et réalisé en un matériau d'injection thermoplastique souple à température ambiante, ce moule comprenant des plaques appliquées les unes sur les autres pour former un empilement s'étendant, suivant une direction d'injection transversale par rapport aux plaques, depuis un premier côté où est disposée une cale chaude contenant le matériau d'injection en fusion, jusqu'à un second côté distant du premier, et un ensemble d'outils de moulage comprenant au moins un reçu de buse, une empreinte et un noyau logés dans l'empilement de plaques, le reçu de buse étant adjacent à la cale chaude et recevant une buse dont une entrée communique avec la cale chaude et dont une sortie communique, par un passage d'injection, avec une cavité de moulage, le noyau comprenant au moins une première embase prolongée, suivant une direction inverse de la direction d'injection, par un doigt de moulage logé dans l'empreinte et se terminant par une extrémité libre, la cavité de moulage étant délimitée au moins par le reçu de buse, l'empreinte et le doigt de moulage du noyau et s'étendant suivant la direction d'injection, depuis le passage d'injection, le noyau étant maintenu dans l'empilement de plaques au moins par son embase et par l'extrémité libre du doigt de moulage, et l'empilement de plaques comprenant deux blocs sélectivement appliqués l'un contre l'autre à une interface entre deux plaques adjacentes formant un plan de joint autorisant à volonté une ouverture ou une fermeture du moule. Un tel moule art connu de FR 1 066 799.

Des moules de ce type sont aujourd'hui utilisés pour réaliser par injection des cartouches rigides à température ambiante, fermées par un piston et destinées à contenir des matériaux visqueux tels que des colles ou des mastics.

Ces moules ne sont pas adaptés à la réalisation de tubes souples à température ambiante et résistant à la fissuration sous contrainte, tels que les tubes utilisés pour le conditionnement de produits cosmétiques.

La fabrication de ces tubes implique en effet d'utiliser des matériaux fortement visqueux, pour assurer la résistance à la fissuration sous contrainte, formés en paroi mince, pour disposer de la souplesse requise.

Ces matériaux fortement visqueux et formés en paroi mince doivent être injectés sous haute pression. Le moule doit donc être conçu pour résister aux déformations qui risquent de se produire, lors de l'injection, sous l'effet de la poussée de la matière dans le moule.

Par ailleurs, ces tubes doivent présenter une résistance à la fissuration sous contrainte égale en tous points de leur paroi. Il est donc nécessaire que l'épaisseur de la paroi soit parfaitement constante et que les différentes nappes de matériau en fusion injectées pour réaliser le tube se rejoignent au plus vite et se soudent les unes par rapport aux autres de façon optimale.

Plus généralement, l'invention porte sur l'architecture et les fonctions d'injection, de refroidissement et d'éjection d'un moule pour le formage par injection d'un tube souple, étant donné les contraintes spécifiques inhérentes au matériau utilisé et à sa souplesse, à la dimension et à la forme du tube souple.

L'invention a ainsi pour but de proposer un moule susceptible, même dans son mode de réalisation le plus élémentaire, de résoudre l'un au moins de ces problèmes.

A cette fin, le moule de l'invention, par ailleurs conforme à la définition générique qu'en donne le préambule ci-dessus, est essentiellement caractérisé en ce que les outils de moulage de l'ensemble comprenant au moins le reçu de buse, l'empreinte, et le noyau présentent des paires de surfaces d'appui respectives au moins partiellement coniques et axées sur la direction d'injection, en ce que ces outils de moulage sont mutuellement centrés et alignés l'un sur l'autre, par paires d'outils constituées de proche en proche, au moyen d'une force axiale sollicitant l'une en direction de l'autre les surfaces d'appui respectives des outils de chaque paire constituée, et en ce que chaque surface d'appui de chaque outil de chaque paire constituée est formée par une partie de cet outil qui est privée de mobilité fonctionnelle transversalement à la direction d'injection.

Les surfaces d'appui peuvent ainsi former, par contact deux à deux au moins trois interfaces par lesquelles les outils de moulage sont deux à deux en appui de centrage l'un contre l'autre, les surfaces d'appui offertes par les outils de moulage à chacune de ces trois interfaces étant de préférence constituées par des parties monobloc respectives de ces outils de moulage.

Le reçu de buse et l'empreinte peuvent même être intégralement formés chacun d'une seule pièce.

Dans le mode de réalisation préféré de l'invention, le plan de joint passe entre le reçu de buse et l'empreinte.

Pour améliorer encore le démoulage, le doigt de moulage présente avantageusement un état de surface qui, pour l'obtention d'une adhérence minimale du tube sur ce doigt de moulage après injection, est au moins équivalent à un état de surface obtenu par application de l'un au moins des traitements de surface constitués par un sablage, un microbillage, un traitement par laser, et un traitement chimique.

Pour améliorer l'homogénéité du tube injecté, la paire de surfaces d'appui que présentent le noyau et le reçu de buse est de préférence constituée par une surface d'appui concave du noyau et une surface d'appui convexe du reçu de buse, ce dont il résulte que la douille de distribution du tube se termine en une cuvette.

Dans le moule de l'invention, le reçu de buse peut être conformé pour mouler au moins une face externe du col du tube, jusqu'à une zone de raccordement avec la jupe.

Le doigt de moulage du noyau peut lui-même s'étendre depuis la première embase, mouler une face interne de la jupe, et présenter un épaulement bordant son extrémité libre et propre à mouler une face interne du col.

Par ailleurs, le noyau comprend de préférence une partie externe et une partie interne, conformées de manière que la partie interne s'étende, suivant une direction inverse de la direction d'injection, depuis une seconde embase du noyau jusqu'à une pointe disposée à l'extrémité libre du doigt de moulage, et que la partie interne soit montée axialement coulissante à l'intérieur de la partie externe entre une position d'appui, pour laquelle la pointe est en appui sur le reçu de buse, et une position dégagée, pour laquelle la pointe est distante du reçu de buse.

Dans ces conditions, la pointe de la partie interne du noyau peut mouler une face interne de la douille, et des coulisses peuvent être montées mobiles en translation dans des logements radiaux du reçu de buse pour mouler une face externe de la douille, ces coulisses pouvant obturer de façon étanche, en position ouverte et en position fermée, les logements du reçu de buse dans lesquels elles sont montées mobiles.

En particulier, les coulisses peuvent être au nombre de deux, être disposées dans l'alignement l'une de l'autre de part et d'autre du passage d'injection, et être montées mobiles, transversalement à la direction d'injection. entre une position fermée où elles se touchent et une position ouverte où elles sont mutuellement écartées, le reçu de buse étant percé d'un conduit d'air débouchant entre les coulisses et relié à une source d'air sous pression, et les coulisses obturant et dégageant le conduit d'air respectivement dans leur position fermée et dans leur position ouverte.

Dans le cas où le noyau est en deux parties, le moule peut comprendre, du second côté, un vérin déplaçant sélectivement la seconde embase du noyau, et ce vérin, pour obtenir l'appui de centrage du noyau sur le reçu de buse, peut déplacer la seconde embase du noyau, suivant une direction inverse de la direction d'injection, jusqu'à une butée qui définit une longueur de la partie interne du noyau pour laquelle cette partie interne du noyau subit une compression élastique prédéterminée par appui de sa pointe sur le reçu de buse.

Le vérin est de préférence un vérin à double effet propre à libérer sélectivement la seconde embase du noyau suivant la direction d'injection après l'injection de la jupe du tube, permettant ainsi d'écarter l'un de l'autre la pointe et le reçu de buse.

Pour obtenir un refroidissement adéquat du moule, la partie interne du noyau est avantageusement traversée par un canal axial dans lequel est logée une aiguille creuse s'étendant depuis une extrémité de raccordement disposée dans la seconde embase du noyau jusqu'à une extrémité de distribution disposée à proximité de la pointe de cette partie interne, l'extrémité de raccordement de cette aiguille étant, en fonctionnement du moule, reliée à une source de fluide de refroidissement, et l'aiguille et le canal axial étant séparés l'un de l'autre par un interstice offrant au fluide injecté dans l'aiguille une voie de circulation pour retourner vers la seconde embase du noyau.

En outre, il peut être utile de prévoir que les parties interne et externe du noyau présentent toutes deux des premières et secondes sections axiales dont les secondes sont relativement plus proches de la pointe que les premières, que les premières sections axiales réalisent, entre les parties interne et externe du noyau, un couplage thermique déterminant un premier flux thermique, que les secondes sections axiales réalisent, entre les parties interne et externe du noyau, un couplage thermique déterminant un second flux thermique, et que le second flux soit plus important que le premier flux.

Si les outils de moulage sont disposés l'un par rapport à l'autre avec un premier jeu maximum et sont disposés par rapport aux plaques avec un second jeu maximum, il convient de faire en sorte que le second jeu maximum soit supérieur au premier jeu maximum, et que les plaques soient régulées en température de manière à présenter entre elles une dilatation différentielle inférieure au second jeu maximum.

Le passage d'injection comprend de préférence un canal d'alimentation central et des canaux d'alimentation radiaux dont chacun s'étend depuis le canal central jusqu'à une zone de raccordement à la douille, où ce canal radial présente une largeur de raccordement et où la douille présente un périmètre déterminé, et les largeurs de raccordement cumulées des canaux d'alimentation radiaux représentent avantageusement au moins 15% du périmètre déterminé de la douille, ou, plus avantageusement encore, plus de 25% du périmètre déterminé de la douille.

Dans ce cas, les canaux radiaux peuvent en outre présenter une largeur qui croît, suivant une direction radiale centrifuge, jusqu'à atteindre une largeur maximale dans la zone de raccordement à la douille.

Pour améliorer l'étalement en nappe du matériau injecté, la cavité de moulage présente de préférence une zone d'étranglement annulaire au-delà de la zone de raccordement de chaque canal radial avec la douille.

Pour garantir une position radiale fixe de chaque coulisse dans la position de fermeture du moule, cette coulisse est de préférence reliée, à distance du passage d'injection, à une surface inclinée du premier bloc de plaques, coopérant avec une surface inclinée du second bloc de plaques.

Pour éviter toute adhérence résiduelle du matériau d'injection à la buse, celle-ci peut comporter, entre son entrée et sa sortie, un obturateur permettant d'interrompre un écoulement du matériau d'injection depuis la cale chaude vers le passage d'injection, à la sortie de la buse.

Le moule de l'invention peut être conformé de manière que les faces interne et externe de la jupe fassent entre elles, dans un plan médian du tube, un angle inférieur à 0.002 radians, la jupe présentant ainsi sur toute sa surface une résistance très homogène à la déformation.

L'invention concerne également un procédé de fabrication d'un tube présentant une douille de distribution surmontant un col qui s'évase radialement jusqu'à une jupe tubulaire souple, ce procédé comprenant essentiellement une phase de moulage et une phase de démoulage, la phase de moulage consistant à former le tube en injectant, à travers un passage d'injection, un matériau d'injection thermoplastique en fusion dans une cavité de moulage présentant un plan de joint et au moins partiellement délimitée par un noyau et une empreinte, la douille étant moulée dans une partie de la cavité de moulage qui est adjacente au passage d'injection, et la phase de démoulage, qui succède à la phase de moulage après solidification du matériau injecté, comprenant une opération de maintien consistant à maintenir temporairement le tube, une opération de dévêtissage consistant à extraire partiellement le noyau du tube, une opération d'ouverture consistant à ouvrir la cavité de moulage, et une opération d'éjection consistant à éjecter le tube de la cavité de moulage, l'opération d'ouverture étant consécutive à l'opération de dévêtissage et consistant à ouvrir la cavité de moulage au plan de joint, entre le col et la jupe du tube.

Selon l'invention, ce procédé est essentiellement caractérisé en ce qu'il comprend une opération d'accompagnement, concomitante à l'une au moins des opérations de dévêtissage et d'ouverture, et consistant à souffler de l'air entre le noyau et le tube.

Par ailleurs, l'opération de maintien est de préférence réalisée en maintenant le tube par la douille au moyen de coulisses préalablement placées en position mutuellement rapprochées avant l'opération de moulage, et cette opération de maintien se poursuit pendant l'opération d'ouverture.

L'opération d'éjection peut, quant à elle, consister essentiellement à interrompre l'opération de maintien en écartant les coulisses l'une de l'autre, et à souffler de l'air entre les coulisses écartées et une face externe de la douille.

Enfin, l'opération de maintien est de préférence interrompue avant la fin de l'opération d'ouverture, de sorte que le tube formé tombe de lui-même entre les deux parties du moule ouvert.

D'autres caractéristiques et avantages de l'invention ressortiront clairement de la description qui en est faite ci-après, à titre indicatif et nullement limitatif, en référence aux dessins annexés, dans lesquels :
- La figure 1 est une vue en coupe d'un moule conforme à l'invention, la coupe ayant été effectuée suivant un premier plan contenant la direction d'injection;
- La figure 2 est une vue en coupe d'un détail du moule de la figure 1 représenté à une échelle supérieure, la coupe ayant été effectuée suivant un second plan contenant la direction d'injection et perpendiculaire au plan de la figure 1;
- La figure 3 est une vue en coupe d'un détail agrandi du moule de la figure 2 et du tube représenté en fin d'injection;
- La figure 4 est une vue en coupe agrandie du reçu de buse tel que représenté sur la figure 1;
- La figure 5 est une vue de dessus du reçu de buse illustré à la figure 4;
- La figure 6 est une vue en coupe agrandie du reçu de buse tel que représenté sur la figure 2;
- La figure 7 est une vue en coupe partielle agrandie du reçu de buse tel que représenté sur la figure 6;
- La figure 8 est une vue de dessus de l'interface d'appui mutuel de la pointe du noyau et du reçu de buse;
- La figure 9 est une vue en coupe partielle agrandie de la douille du tube après injection; et
- La figure 10 est une vue en coupe schématique de la partie du moule au voisinage de la douille du tube.

Par commodité, on considérera ci-après, en conformité avec les figures, que le moule est observé suivant une orientation pour laquelle la douille du tube se trouve au-dessus de la jupe de ce dernier, étant entendu qu'en pratique, le moule est plutôt utilisé de façon telle que la direction d'injection du tube est horizontale.

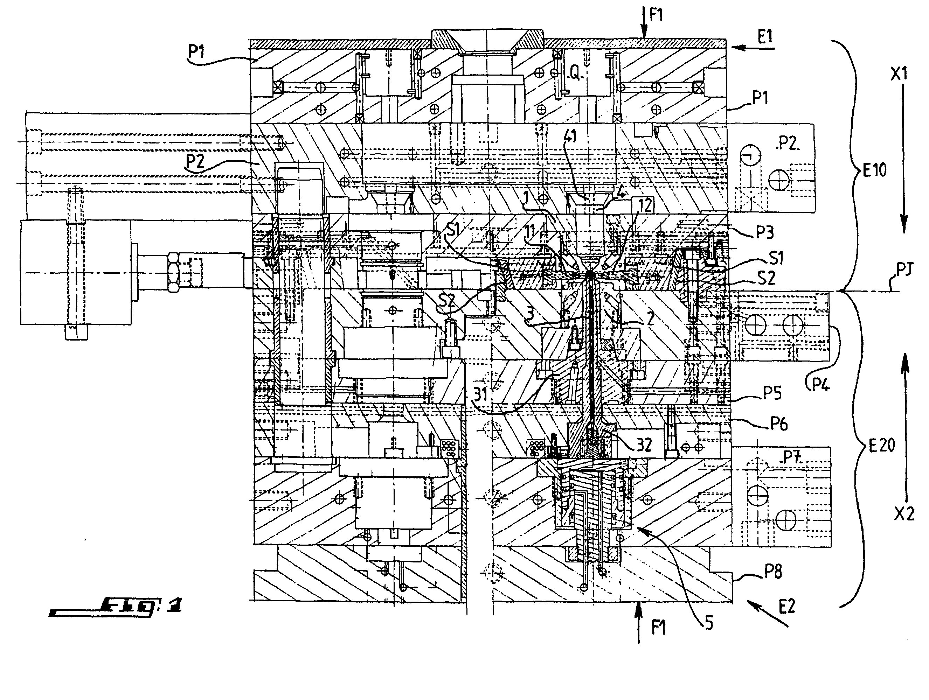

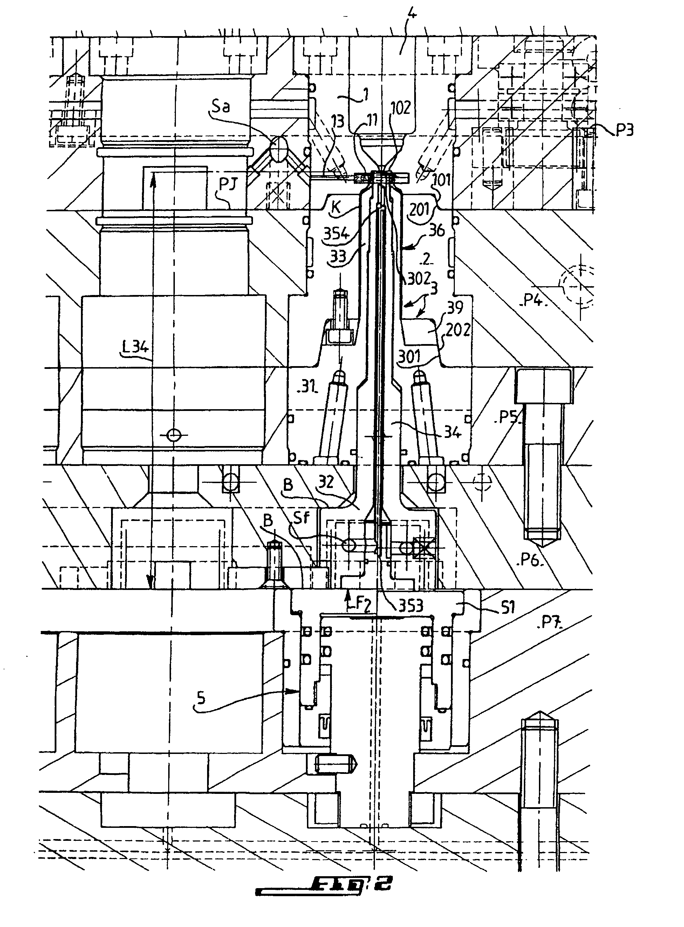

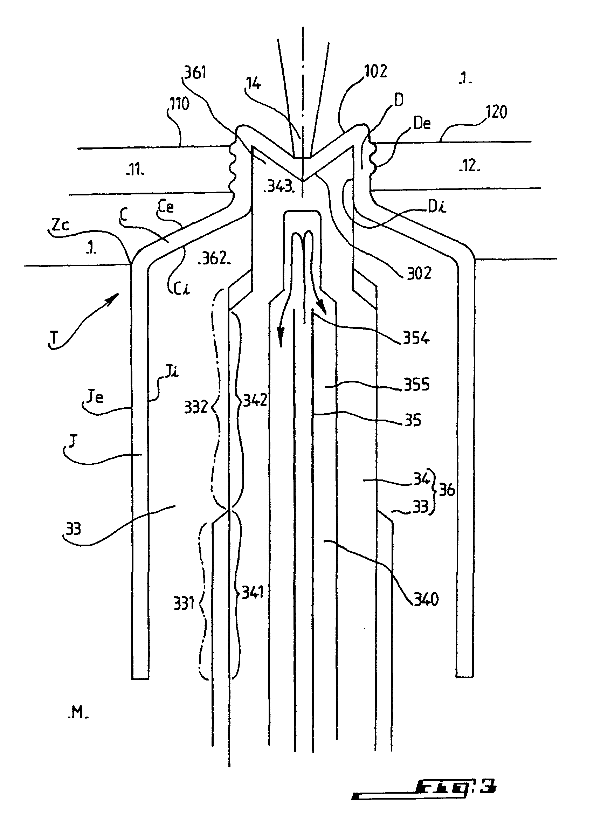

L'invention concerne un moule permettant d'injecter un tube T partiellement visible sur la figure 3 et réalisé en un matériau d'injection thermoplastique souple à température ambiante.

Ce tube présente une douille de distribution D qui surmonte un col C, ce dernier s'évasant radialement jusqu'à une jupe tubulaire J.

Comme le montre la figure 1, le moule comprend d'abord un ensemble de plaques P1 à P8 qui sont appliquées les unes sur les autres, et qui forment un empilement composé de deux blocs E10 et E20.

Cet empilement s'étend, suivant une direction d'injection, notée X1 et transversale par rapport aux plaques P1 à P8, depuis un premier côté E1 jusqu'à un second côté E2, distant du premier côté E1.

Les blocs E10 et E20 sont à volonté appliqués l'un contre l'autre à leur interface, qui est aussi l'interface entre les deux plaques adjacentes P3 et P4, et qui forme un plan de joint PJ autorisant l'ouverture et la fermeture du moule. Sur le premier côté E1 du moule est prévue une cale chaude Q, c'est-à-dire un réservoir destiné à contenir le matériau d'injection en fusion.

Le moule comporte par ailleurs un ensemble d'outils de moulage, qui comprennent un reçu de buse 1, une empreinte 2 et un noyau 3, et qui sont logés dans l'empilement de plaques.

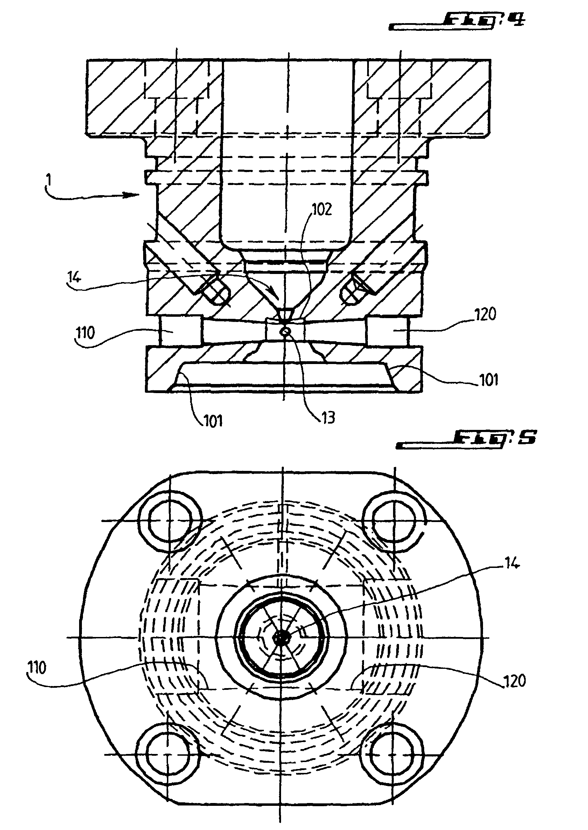

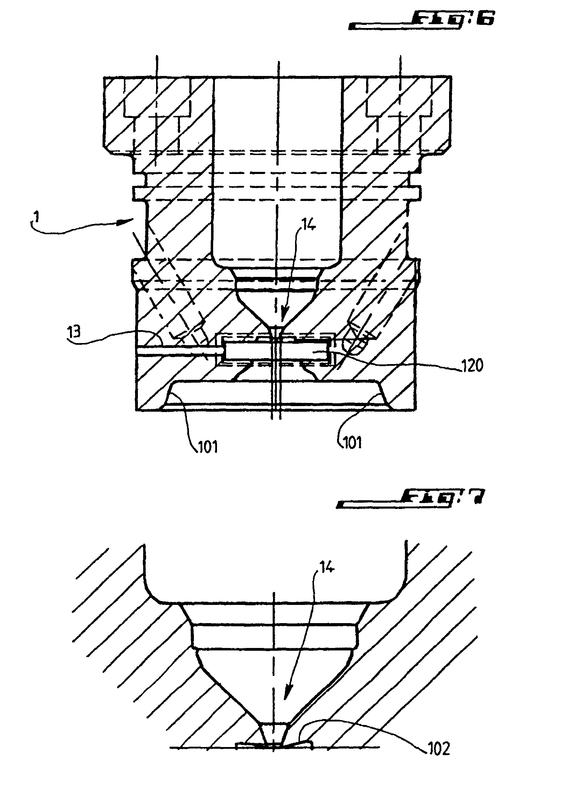

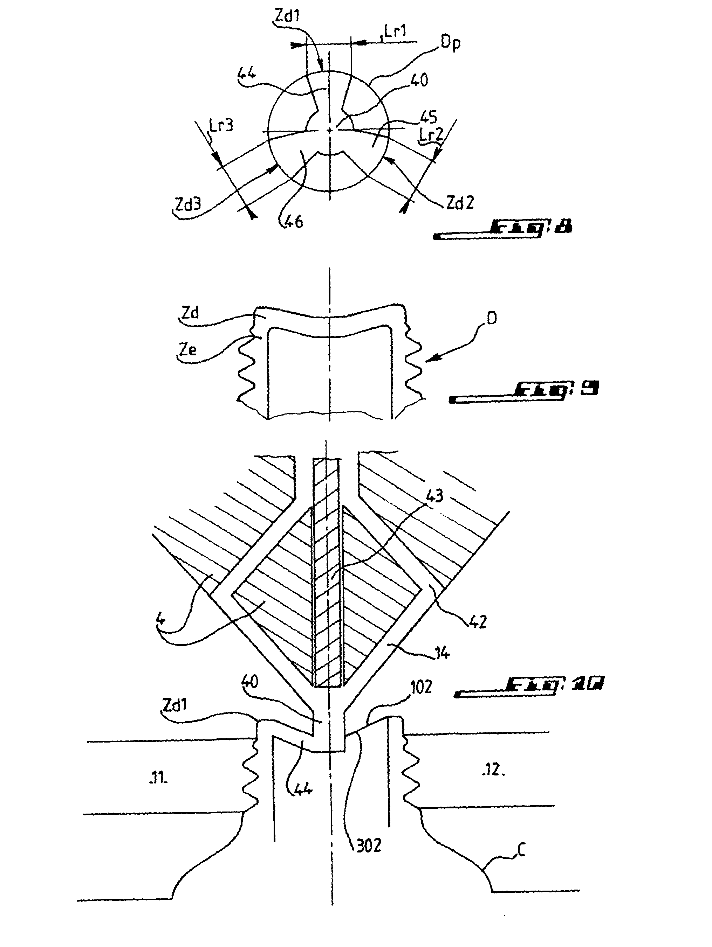

Le reçu de buse 1, qui est visible en détail sur les figures 4 à 7, est adjacent à la cale chaude Q et est destiné à recevoir une buse 4, uniquement visible sur les figures 1 et 10.

Une entrée 41 de la buse 4 communique avec la cale chaude Q et une sortie 42 de cette buse (figure 10) communique, par un passage d'injection 14, avec une cavité de moulage K (figure 2) dans laquelle est injecté le matériau destiné à constituer le tube.

Le noyau 3 comprend une première embase 31 qui est prolongée, suivant une direction X2 inverse de la direction d'injection X1, par un doigt de moulage 36 logé dans l'empreinte 2 et se terminant par une extrémité libre 361 (figure 3).

Dans ces conditions, la cavité de moulage K se trouve délimitée par le reçu de buse 1, par l'empreinte 2, et par le doigt de moulage 36 du noyau 3, et s'étend, suivant la direction d'injection X1, depuis le passage d'injection 14.

Comme le montre le mieux la figure 2, le noyau 3 est maintenu dans l'empilement de plaques par son embase 31, et par l'extrémité libre 361 du doigt de moulage 36.

Selon un premier aspect spécifique de l'invention, les outils de moulage que constituent le reçu de buse 1, l'empreinte 2, et le noyau 3 présentent des paires de surfaces d'appui respectives, référencées 101 et 102 pour le reçu de buse, 201 et 202 pour l'empreinte, et 301 et 302 pour le noyau 3, ces paires de surfaces d'appui étant au moins partiellement coniques et axées sur la direction d'injection X1.

Selon un second aspect spécifique de l'invention, ces outils de moulage 1, 2 et 3 sont mutuellement centrés et alignés l'un sur l'autre, par les paires d'outils constituées de proche en proche que représentent les paires 1-2, 2-3 et 3-1, au moyen d'une force axiale F1+F2 (figures 1 et 2) qui sollicite l'une en direction de l'autre les surfaces d'appui respectives des outils de chaque paire constituée 1-2, 2-3 et 3-1, c'est-à-dire les surfaces d'appui 101 et 201 pour le reçu de buse et l'empreinte, les surfaces d'appui 202 et 301 pour l'empreinte et le noyau, et les surfaces d'appui 302 et 102 pour le noyau et le reçu de buse.

Enfin, selon un troisième aspect spécifique de l'invention, chaque surface d'appui de chaque outil de chacune des paires constituées 1-2, 2-3 et 3-1, c'est-à-dire chacune des surfaces d'appui 101, 201, 202, 301, 302 et 102, est formée par une partie de l'outil correspondant qui est privée de mobilité fonctionnelle transversalement à la direction d'injection X1, cette partie étant donc soit fixe soit mobile seulement suivant une direction sensiblement parallèle à la direction d'injection X1.

Dans le mode de réalisation illustré, la force axiale F1+F2 est composée d'une force F1 (figure 1) qui applique les plaques les unes contre les autres, et d'une force F2 (figure 2) qui applique le noyau 3 contre le reçu de buse 1, d'une façon qui sera décrite plus en détail ultérieurement.

Ainsi, les surfaces d'appui 101, 102, 201, 202, 301, et 302 forment, par contact deux à deux, trois interfaces qui seront notées 101-201, 202-301, et 302-102 et par lesquelles les outils de moulage 1, 2 et 3 sont deux à deux en appui de centrage l'un contre l'autre.

Par ailleurs, pour assurer un positionnement précis des outils de moulage les uns par rapport aux autres, les surfaces d'appui 101, 102, 201, 202, 301, et 302 offertes par ces outils de moulage à chacune de ces trois interfaces 101-201, 202-301, 302-102 sont constituées par des parties monobloc respectives de ces outils de moulage 1, 2, 3.

En d'autres termes, les outils de moulage sont chacun formés d'une seule pièce au moins à l'endroit de leur surface d'appui, le reçu de buse 1 et l'empreinte 2 pouvant même, quant à eux, être intégralement formés d'une seule pièce chacun.

Dans le mode de réalisation préféré et illustré de l'invention, le plan de 000oint PJ passe entre le reçu de buse 1 et l'empreinte 2, c'est-à-dire que les plaques P3 et P4 peuvent être aisément séparées l'une de l'autre.

Pour faciliter le démoulage du tube T, le doigt de moulage 36 subit de préférence au moins un traitement de surface choisi dans l'ensemble des traitements de surface constitués par un sablage, un microbillage, un traitement par laser, et un traitement chimique, et dont le rôle est d'adoucir les aspérités de surface du doigt de moulage.

Par exemple, ce dernier peut subir un sablage, suivi d'un microbillage, éventuellement suivi d'un traitement laser qui opère une fusion superficielle de la surface.

Dans le cas où un sablage est réalisé, ce dernier est très avantageusement suivi d'un traitement propre à émousser les micro-pointes qui en résultent, et par exemple d'un micro-billage.

De même, dans le cas où un micro-billage est réalisé, ce traitement est très avantageusement précédé d'un traitement qui provoque des micro-aspérités dans la surface traitée, et par exemple d'un sablage.

D'autres traitements de surface peuvent éventuellement être choisis, pour autant qu'ils ne conduisent pas, par rapport aux traitements précédemment cités, à une adhérence plus élevée du tube T sur le doigt de moulage 36 après injection.

La paire de surfaces d'appui 302 et 102 que présentent le noyau 3 et le reçu de buse 1 est par ailleurs constituée, de préférence, par une surface d'appui concave 302 du noyau 3 et une surface d'appui convexe 102 du reçu de buse 1.

Grâce à cette caractéristique et par le fait de son énergie cinétique initiale, le matériau injecté à travers le passage 14, le canal d'alimentation central 40 et les canaux radiaux 44 à 46 qui seront mieux décrits ultérieurement, se trouve défléchi latéralement selon une direction annulaire aux zones de contact Z des canaux radicaux et de la douille D, lors de l'injection.

Cet étalement a lui-même pour effet que les différentes nappes de matériau d'injection en fusion qui progressent dans la cavité de moulage K en provenance des différents canaux radiaux 44 à 46 se rejoignent et se soudent. l'écoulement du matériau d'injection étant ainsi aussi homogène que possible.

Corrélativement, comme le montre la figure 3, la douille de distribution D du tube injecté se termine en une cuvette, ce qui confère au tube fini, après perçage de la cuvette, un confort d'utilisation particulier, lié à la conformation du doigt sur la cuvette et lié également au fait que toute quantité de produit excédentaire sortie du tube se trouve temporairement contenue dans la cuvette et peut retourner dans le tube sous l'effet de l'aspiration que produit ce dernier dès que la pression qui l'a déformé se relâche.

Comme le montre la figure 3, le reçu de buse 1 est conformé pour mouler la face externe Ce du col C du tube, jusqu'à la zone de raccordement Zc du col C avec la jupe J, alors que le doigt de moulage 36 du noyau 3, qui s'étend depuis la première embase 31 (figure 2), moule la face interne Ji de la jupe J et présente un épaulement 362 qui borde son extrémité libre et qui permet de mouler la face interne Ci du col C.

Dans le mode de réalisation préféré de l'invention, le noyau 3 comprend en fait, y compris au niveau du doigt de moulage 36, une partie externe 33 et une partie interne 34.

La partie interne 34 du noyau 3 s'étend, suivant la direction X2 inverse de la direction d'injection X1, depuis une seconde embase 32 du noyau 3 jusqu'à une pointe 343, qui est disposée à l'extrémité libre 361 du doigt de moulage 36.

La partie interne 34 du noyau 3 est montée axialement coulissante à l'intérieur de la partie externe 33 entre une position d'appui, illustrée sur la moitié gauche de la figure 2 et pour laquelle la pointe 343 est en appui sur le reçu de buse 1, et une position dégagée, illustrée à la figure 3 sur la moitié droite de la figure 2, et pour laquelle la pointe 343 est distante du reçu de buse 1.

Plus précisément, la partie interne 34 du noyau, dont la pointe 343 moule une face interne Di de la douille D, se trouve dans sa position d'appui pendant tout le temps où la jupe J et éventuellement le col C sont injectés, et n'adopte sa position dégagée que pour l'injection de la douille D, ou au moins de la cuvette qui l'obture (figure 3).

La face externe De de la douille D est moulée par des coulisses 11, 12 (figures 1, 3, et 10) qui sont montées mobiles en translation, transversalement à la direction d'injection X1, dans des logements radiaux 110, 120 du reçu de buse 1, et qui obturent ces derniers de façon étanche.

Ces coulisses 11, 12, qui sont de préférence au nombre de deux, sont disposées dans l'alignement l'une de l'autre, de part et d'autre du passage d'injection 14, et adoptent à volonté une position fermée, dans laquelle elles se touchent, et une position ouverte dans laquelle elles sont écartées l'une de l'autre, les coulisses obturant les logements radiaux du reçu de buse quelle que soit leur position.

Par ailleurs, le reçu de buse 1 est percé d'un conduit d'air 13 qui débouche entre ces coulisses 11, 12 et qui relié à une source d'air sous pression Sa, les coulisses pouvant ainsi obturer le conduit d'air 13 dans leur position fermée, et le dégager dans leur position ouverte.

Le mouvement de la partie interne 34 du noyau 3, qui permet à ce dernier de passer de sa position d'appui à sa position dégagée et inversement, est commandé par un vérin à double effet 5, qui est disposé au voisinage du second côté E2 du moule et qui peut déplacer la seconde embase 32 du noyau 3.

Pour obtenir l'appui de centrage du noyau 3 sur le reçu de buse 1, le vérin 5 déplace la seconde embase 32 du noyau, suivant la direction X2, jusqu'à une butée B qui définit une longueur L34 de la partie interne 34 du noyau 3 pour laquelle cette partie interne 34 subit, par appui de sa pointe 343 sur le reçu de buse 1, une compression élastique qui détermine la force d'appui F2 précédemment évoquée.

Comme le montre la partie gauche de la figure 2, il est possible, pour donner à cette compression une valeur prédéterminée et fixe, de limiter la course du piston 51 du vérin 5 en faisant en sorte, par exemple, que ce piston vienne en butée B sur un bord de la plaque P6 et / ou que l'embase 32 vienne en butée B sur un épaulement interne de la plaque P6.

Après l'injection de la jupe J et éventuellement du col C du tube T, le vérin est commandé pour libérer la seconde embase 32 du noyau suivant la direction d'injection X1, permettant ainsi d'écarter du reçu de buse 1 la pointe 343 de la partie interne 34 du noyau, et permettant l'injection de la cuvette qui ferme la douille D (figure 3).

Les plaques du moule sont, de façon connue en soi, percées de canaux permettant notamment d'évacuer la chaleur apportée par le matériau en fusion injecté, et la solidification des tubes après leur injection.

Néanmoins, l'application privilégiée du moule de l'invention à l'injection de tubes souples, y compris de tubes de taille relativement faible, exige la mise en place de solutions spécifiques.

A cette fin, il est d'abord utile de faire en sorte que les outils de moulage 1, 2 et 3, au moins lorsque la force axiale F1+F2 est appliquée, soient disposés l'un par rapport à l'autre, et transversalement à la direction d'injection X1, avec un premier jeu maximum prédéterminé Jm1 (non représenté), et de faire en sorte qu'ils soient disposés par rapport aux plaques P1 à P8 avec un autre jeu maximum prédéterminé Jm2 (non représenté), supérieur au premier jeu maximum Jm1.

Par ailleurs, les plaques P1 à P8 sont régulées en température de manière à présenter entre elles une dilatation différentielle inférieure au second jeu maximum Jm2.

Grâce à ces mesures, les outils de moulage 1, 2 et 3 adoptent les uns par rapport aux autres, pendant l'injection, une position relative qui est substantiellement indépendante des dilatations de l'empilement de plaques P1 à P8.

Pour obtenir un fonctionnement optimal du moule de l'invention, il est également utile de prévoir des moyens spécifiques permettant d'installer, le long du doigt de moulage 36, un gradient de température adéquat pour l'écoulement du matériau d'injection.

A cette fin, la partie interne 34 du noyau est traversée par un canal axial 340 dans lequel est logée une aiguille creuse 35 permettant la circulation d'un fluide de refroidissement, d'eau par exemple.

L'aiguille creuse 35 comprend une extrémité de distribution 354 disposée, dans le canal axial 340, à proximité de la pointe 343 de cette partie interne 34, et une extrémité de raccordement 353 disposée dans la seconde embase 32 du noyau, et reliée, lorsque le moule est utilisé, à une source Sf de fluide de refroidissement, telle qu'une conduite d'eau sous pression.

Par ailleurs, l'aiguille 35 et le canal axial 340 sont séparés l'un de l'autre par un interstice 355, qui offre au fluide injecté dans l'aiguille 35 une voie de circulation lui permettant de retoumer vers la seconde embase 32 du noyau.

D'autre part, les parties interne 34 et externe 33 du noyau 3 présentent toutes deux des sections axiales coopérant mutuellement pour assurer une diffusion de chaleur qui varie le long du doigt de moulage 36.

Plus précisément, la partie interne 34 présente une première section axiale 341 et une seconde section axiale 342 succédant à la première en direction de la pointe 343 de cette partie interne.

De même, la partie externe 33 présente des première et seconde sections axiales 331 et 332 disposées au moins approximativement en regard des première et seconde sections axiales 341 et 342 de la partie interne 34.

Les premières sections axiales 331 et 341 sont radialement espacées l'une de l'autre par un écartement relativement important, de sorte qu'elles assurent un couplage thermique déterminant, pour une différence de température déterminée, un flux thermique relativement faible entre le canal axial 340 et la surface externe du doigt de moulage 36.

En revanche, les secondes sections axiales 332 et 342 ne sont espacées radialement l'une de l'autre que par un jeu très faible, de sorte qu'elles assurent un couplage thermique déterminant, pour une différence de température déterminée, un flux thermique relativement important entre le canal axial 340 et la surface externe du doigt de moulage 36.

Grâce à cette structure, la chaleur apportée par la matériau en fusion est principalement évacuée au voisinage de la pointe 343 de la partie interne du noyau 3, et de façon beaucoup plus modérée à distance de cette pointe 343. de manière que la température à distance de cette pointe soit maintenue à une valeur suffisante pour assurer un écoulement satisfaisant du matériau en fusion destiné à former la jupe J du tube.

Comme le montrent les figures 8 et 10, le passage d'injection 14 comprend un canal d'alimentation central 40 et des canaux d'alimentation radiaux tels que 44 à 46, dont chacun est creusé dans la partie interne du noyau et s'étend depuis le canal central 40 jusqu'à une zone de raccordement correspondante, notée Zd1, Zd2 et Zd3, avec la douille D.

Si l'on convient de noter Dp le périmètre de la douille D, c'est-à-dire le périmètre du cercle visible sur la figure 8, et de noter Lr1, Lr2 et Lr3 les largeurs respectives des canaux radiaux 44, 45 et 46 à l'endroit où ils se raccordent à la douille D, il est avantageux de faire en sorte que les largeurs de raccordement Lr1, Lr2, Lr3 cumulées des canaux d'alimentation radiaux 44 à 46 représentent au moins 15% du périmètre Dp de la douille D, et même de préférence plus de 25% de ce périmètre, de manière à assurer un étalement maximum des nappes de matériau en fusion traversant ces canaux radiaux et la constitution aussi rapide que possible d'un flot annulaire du matériau au sortir des zones Zd1, Zd2, Zd3.

Afin de préserver une surface d'appui aussi importante que possible de l'extrémité 361 du noyau sur le reçu de buse, il est particulièrement avantageux que les canaux radiaux 44 à 46 présentent une largeur qui croît, suivant une direction radiale centrifuge, jusqu'à atteindre une largeur maximale Lr1, Lr2, Lr3 dans la zone de raccordement Zd1, Zd2, Zd3 à la douille D.

Par ailleurs, comme le montre la figure 9, la cavité de moulage K présente une zone d'étranglement annulaire Ze au-delà de la zone de raccordement Zd1, Zd2, Zd3 de chaque canal radial 44 à 46 avec la douille D, la présence d'une telle zone d'étranglement Ze favorisant également l'étalement des nappes de matériau en fusion.

Comme le montre la figure 1, chacune des coulisses 11 et 12 est reliée, à distance du passage d'injection 14, à une surface inclinée S1 du premier bloc E10 de plaques, et cette première surface inclinée S1 coopère avec une seconde surface inclinée S2 du second bloc E20 de plaques, pour garantir une position radiale fixe de cette coulisse 11, 12 dans la position de fermeture du moule.

Comme le montre par ailleurs la figure 10, la buse 4 présente à sa sortie 42, un obturateur 43 qui est commandé en translation pour interrompre l'écoulement du matériau d'injection au niveau du canal d'injection centrai 40, à la fin de l'injection.

Le moule de l'invention, en particulier dans le cas où le plan de joint PJ passe entre le reçu de buse 1 et l'empreinte 2, permet de faire en sorte que les faces interne et externe Ji et Je de la jupe J du tube fassent entre elles, dans un plan médian M du tube, c'est-à-dire dans le plan de la figure 3, un angle inférieur à 0.002 radians.

L'invention concerne également un procédé de fabrication de tubes, dont la spécificité se situe notamment dans la façon de mettre en oeuvre le moule tel que précédemment décrit.

Ce procédé comprend essentiellement une phase de moulage et une phase de démoulage, la phase de moulage consistant à former le tube en injectant dans la cavité de moulage K, à travers le canal central d'injection 40, un matériau d'injection thermoplastique en fusion, et dans une orientation telle que la douille D soit moulée dans une partie de la cavité de moulage K qui est adjacente au canal central d'injection 40.

La phase de démoulage, qui succède à la phase de moulage et qui intervient après solidification du matériau injecté, comprend essentiellement une opération de maintien, une opération de dévêtissage, une opération d'ouverture, et une opération d'éjection.

L'opération de maintien consiste à maintenir temporairement le tube T, notamment au moyen des coulisses 11 et 12, jusqu'à ce que le tube soit, par l'opération d'éjection, éjecté de la cavité de moulage K.

L'opération de dévêtissage consiste à extraire partiellement le noyau 3 du tube T, de manière que ce tube puisse ensuite aisément glisser par rapport au noyau.

Selon l'invention, l'opération d'ouverture est consécutive à l'opération de dévêtissage et consiste à ouvrir la cavité de moulage au plan de joint PJ, entre le col C et la jupe J du tube.

Par ailleurs, l'opération de maintien, qui est réalisée en maintenant le 0ube T par la douille D au moyen de coulisses 11 et 12 préalablement placées en position mutuellement rapprochées avant l'opération de moulage, se poursuit pendant l'opération d'ouverture.

Le procédé de l'invention comprend en outre de préférence une opération d'accompagnement, qui est concomitante à l'une au moins des opérations de dévêtissage et d'ouverture, et qui consiste à souffler de l'air entre le noyau 3 et le tube T.

L'opération d'éjection consiste alors essentiellement à interrompre l'opération de maintien en écartant les coulisses 11 et 12 l'une de l'autre, et à souffler de l'air entre les coulisses écartées et la face externe De de la douille D.

Enfin, l'opération de maintien est avantageusement interrompue avant la fin de l'opération d'ouverture.

La séquence des opérations est donc de préférence la suivante.

D'abord, le matériau en fusion est injecté dans la cavité de moulage K sous une pression élevée, préférablement comprise entre 1250 et 2500 bars, tandis que la force de pressage F1 est appliquée sur l'empilement que forment les plaques P1 à P8 pour les maintenir fermement les unes contre les autres. que les coulisses 11 et 12 sont fermées, et que le vérin 5 pousse la surface d'appui 302 de la partie interne 34 du noyau 3 contre la surface d'appui 102 du reçu de buse 1.

Vers la fin de l'injection, le vérin 5 est commandé pour libérer la partie interne 34 du noyau 3 permettre au matériau d'injection de venir former la cuvette qui ferme la douille D. Puis, l'obturateur 43 est actionné pour mettre fin à l'écoulement du matériau en fusion vers la cavité de moulage K.

Après solidification du matériau injecté, la force de pressage F1 cesse d'être appliquée, et les plaques P4 et P5 sont légèrement écartées l'une de l'autre pendant que de l'air est soufflé entre le noyau 3 et le tube T. Le mouvement relatif des plaques P4 et P5 permet alors à la collerette de dévêtissage 39 de décoller du doigt de moulage 36 la base de la jupe J du tube, ce décollement se propageant tout le long de la jupe J par le double effet du mouvement des plaques P4 et P5 et de la pression de l'air soufflé.

Le moule est alors ouvert au plan de joint PJ, c'est-à-dire par éloignement relatif des plaques P3 et P4.

Avant même que le mouvement d'ouverture du moule au plan de joint soit totalement terminé, les coulisses 11 et 12 sont écartées l'une de l'autre tandis que de l'air est soufflé à travers le conduit d'air 13.

Le tube T formé tombe alors de lui-même entre les deux parties que forme le moule ouvert au plan de joint.

Comme le comprendra l'homme de métier à la lecture de la description qui précède, le fait de prévoir le plan de joint PJ entre le reçu de buse et l'empreinte offre, par rapport à la solution qui consiste à le prévoir à la base de la jupe J du tube, l'avantage que le tube T peut être éjecté du moule après une ouverture de ce dernier sur une longueur à peine supérieure à la longueur du tube, alors qu'un moule disposant d'un plan de joint à la base du tube doit être ouvert sur une longueur double environ pour permettre d'abord au noyau de se dégager de l'empreinte, puis au tube de se dégager du noyau.

Par ailleurs, bien que la description qui précède n'ait illustré qu'une seule cavité de moulage K dans l'ensemble des plaques P1 à P8, l'homme de l'art comprendra que plusieurs cavités de moulage, par exemple 8, 16, 32 ou plus, peuvent être ménagées dans un même ensemble de plaques.

De même, l'homme de l'art comprendra que le mot conique, tel qu'appliqué ici aux surfaces de centrage 101, 102, 201, 202, 301 et 302, prend une acception large incluant toute forme de surface fonctionnellement équivalente à une surface conique du point de vue du centrage qu'elle permet de réaliser.

En effet, bien qu'une surface conique, au sens géométrique le plus strict, constitue une surface de centrage à la fois efficace et facile à réaliser, une surface pyramidale, par exemple, est incluse dans la classe des surfaces coniques, dans l'acception qui est ici donnée au mot conique.

## Revendications

1. Moule pour l'injection d'un tube (T) présentant une douille de distribution (D) surmontant un col (C) qui s'évase radialement jusqu'à une jupe tubulaire (J) et réalisé en un matériau d'injection thermoplastique souple à température ambiante, ce moule comprenant des plaques (P1 à P8) appliquées les unes sur les autres pour former un empilement (E10, E20) s'étendant, suivant une direction d'injection (X1) transversale par rapport aux plaques (P1 à P8), depuis un premier côté (E1) où est disposée une cale chaude (Q) contenant le matériau d'injection en fusion, jusqu'à un second côté (E2) distant du premier (E1), et un ensemble d'outils de moulage comprenant au moins un reçu de buse (1), une empreinte (2) et un noyau (3) logés dans l'empilement de plaques, le reçu de buse (1) étant adjacent à la cale chaude (Q) et recevant une buse (4) dont une entrée (41) communique avec la cale chaude (Q) et dont une sortie (42) communique, par un passage d'injection (14), avec une cavité de moulage (K), le noyau (3) comprenant au moins une première embase (31) prolongée, suivant une direction (X2) inverse de la direction d'injection (X1), par un doigt de moulage (36) logé dans l'empreinte (2) et se terminant par une extrémité libre (361), la cavité de moulage (K) étant délimitée au moins par le reçu de buse (1), l'empreinte (2) et le doigt de moulage (36) du noyau et s'étendant suivant la direction d'injection (X1), depuis le passage d'injection (14), le noyau (3) étant maintenu dans l'empilement de plaques au moins par son embase (31) et par l'extrémité libre (361) du doigt de moulage (36), et l'empilement de plaques comprenant deux blocs (E10, E20) sélectivement appliqués l'un contre l'autre à une interface entre deux plaques adjacentes formant un plan de joint (PJ) autorisant à volonté une ouverture ou une fermeture du moule, **caractérisé en ce que** les outils de moulage de l'ensemble comprenant au moins le reçu de buse (1), l'empreinte (2), et le noyau (3) présentent des paires de surfaces d'appui respectives (101, 102; 201, 202; 301, 302) au moins partiellement coniques et axées sur la direction d'injection (X1), **en ce que** ces outils de moulage (1, 2, 3) sont mutuellement centrés et alignés l'un sur l'autre, par paires d'outils constituées de proche en proche (1-2, 2-3, 3-1), au moyen d'une force axiale (F1+F2) sollicitant l'une en direction de l'autre les surfaces d'appui respectives (101, 201; 202, 301; 302, 102) des outils de chaque paire constituée (1-2, 2-3, 3-1), et **en ce que** chaque surface d'appui (101, 201, 202, 301, 302, 102) de chaque outil (1, 2, 3) de chaque paire constituée (1-2, 2-3, 3-1) est formée par une partie de cet outil qui est privée de mobilité fonctionnelle transversalement à la direction d'injection (X1).

2. Moule suivant la revendication 1, **caractérisé en ce que** les surfaces d'appui (101, 102; 201, 202; 301, 302) forment, par contact deux à deux, au moins trois interfaces (101-201, 202-301, 302-102) par lesquelles les outils de moulage (1, 2, 3) sont deux à deux en appui de centrage l'un contre l'autre, et **en ce que** les surfaces d'appui (101, 102; 201, 202; 301, 302) offertes par les outils de moulage à chacune de ces trois interfaces (101-201, 202-301, 302-102) sont constituées par des parties monobloc respectives de ces outils de moulage (1, 2, 3).

3. Moule suivant l'une quelconque des revendications précédentes. **caractérisé en ce que** le reçu de buse (1) et l'empreinte (2) sont formés chacun d'une seule pièce.

4. Moule suivant l'une quelconque des revendications précédentes **caractérisé en ce que** le plan de joint (PJ) passe entre le reçu de buse (1) et l'empreinte (2).

5. Moule suivant l'une quelconque des revendications précédentes. **caractérisé en ce que** le doigt de moulage (36) présente un état de surface qui, pour l'obtention d'une adhérence minimale du tube (T) sur ce doigt de moulage (36) après injection, est au moins équivalent à un état de surface obtenu par application de l'un au moins des traitements de surface constitués par un sablage, un microbillage, un traitement par laser, et un traitement chimique.

6. Moule suivant l'une quelconque des revendications précédentes, **caractérisé en ce que** la paire de surfaces d'appui (302, 102) que présentent le noyau (3) et le reçu de buse (1) est constituée par une surface d'appui concave (302) du noyau (3) et une surface d'appui convexe (102) du reçu de buse (1), ce dont il résulte que la douille de distribution (D) du tube se termine en une cuvette.

7. Moule suivant l'une quelconque des revendications précédentes **caractérisé en ce que** le reçu de buse (1) est conformé pour mouler au moins une face externe (Ce) du col (C) du tube, jusqu'à une zone de raccordement (Zc) avec la jupe (J).

8. Moule suivant l'une quelconque des revendications précédentes, **caractérisé en ce que** le doigt de moulage (36) du noyau s'étend depuis la première embase (31), moule une face interne (Ji) de la jupe (J), et présente un épaulement (362) bordant son extrémité libre et propre à mouler une face interne (Ci) du col (C).

9. Moule suivant la revendication 8, **caractérisé en ce que** le noyau (3) comprend une partie externe (33) et une partie interne (34), **en ce que** la partie interne (34) s'étend, suivant une direction (X2) inverse de la direction d'injection (X1), depuis une seconde embase (32) du noyau (3) jusqu'à une pointe (343) disposée à l'extrémité libre (361) du doigt de moulage (36), et **en ce que** la partie interne (34) est montée axialement coulissante à l'intérieur de la partie externe (33) entre une position d'appui, pour laquelle la pointe (343) est en appui sur le reçu de buse (1), et une position dégagée, pour laquelle la pointe (343) est distante du reçu de buse (1).

10. Moule suivant la revendication 9, **caractérisé en ce que** la pointe (343) de la partie interne (34) du noyau moule une face interne (Di) de la douille (D).

11. Moule suivant l'une quelconque des revendications précédentes. **caractérisé en ce que** des coulisses (11, 12) sont montées mobiles en translation dans des logements radiaux (110, 120) du reçu de buse (1) pour mouler une face externe (De) de la douille (D).

12. Moule suivant la revendication 11, **caractérisé en ce que** les coulisses (11, 12) obturent de façon étanche en position ouverte et en position fermée les logements (110, 120) du reçu de buse (1) dans lesquels elles sont montées mobiles.

13. Moule suivant la revendication 12, **caractérisé en ce que** les coulisses (11, 12) sont au nombre de deux, sont disposées dans l'alignement l'une de l'autre de part et d'autre du passage d'injection (14), et sont montées mobiles, transversalement à la direction d'injection (X1), entre une position fermée où elles se touchent et une position ouverte où elles sont mutuellement écartées, **en ce que** le reçu de buse (1) est percé d'un conduit d'air (13) débouchant entre les coulisses (11, 12) et relié à une source d'air sous pression (Sa), et **en ce que** les coulisses obturent et dégagent le conduit d'air (13) respectivement dans leur position fermée et dans leur position ouverte.

14. Moule suivant l'une quelconque des revendications précédentes combinée à la revendication 9, **caractérisé en ce qu'**il comprend, du second côté (E2), un vérin (5) déplaçant sélectivement la seconde embase (32) du noyau, et **en ce que**, pour obtenir l'appui de centrage du noyau (3) sur le reçu de buse (1), le vérin (5) déplace la seconde embase (32) du noyau, suivant une direction (X2) inverse de la direction d'injection (X1), jusqu'à une butée (B) qui définit une longueur (L34) de la partie interne (34) du noyau (3) pour laquelle cette partie interne (34) du noyau subit une compression élastique prédéterminée par appui de sa pointe (343) sur le reçu de buse (1).

15. Moule suivant la revendication 14, **caractérisé en ce que** le vérin (5) est un vérin à double effet propre à libérer sélectivement la seconde embase (32) du noyau suivant la direction d'injection (X1) après l'injection de la jupe du tube, permettant ainsi d'écarter l'un de l'autre la pointe (343) et le reçu de buse (1).

16. Moule suivant l'une quelconque des revendications précédentes combinée à la revendication 10, **caractérisé en ce que** la partie interne (34) du noyau est traversée par un canal axial (340) dans lequel est logée une aiguille creuse (35) s'étendant depuis une extrémité de raccordement (353) disposée dans la seconde embase (32) du noyau jusqu'à une extrémité de distribution (354) disposée à proximité de la pointe (343) de cette partie interne (34), l'extrémité de raccordement (353) de cette aiguille (35) étant, en fonctionnement du moule, reliée à une source (Sf) de fluide de refroidissement, et l'aiguille (35) et le canal axial (340) étant séparés l'un de l'autre par un interstice (355) offrant au fluide injecté dans l'aiguille (35) une voie de circulation pour retourner vers la seconde embase (32) du noyau.

17. Moule suivant l'une quelconque des revendications précédentes combinée aux revendications 9 et 10, **caractérisé en ce que** les parties interne (34) et externe (33) du noyau présentent toutes deux des premières et /0econdes sections axiales (331, 332; 341; 342) dont les secondes (332, 342) /0ont relativement plus proches de la pointe (343) que les premières (331, 341). **en ce que** les premières sections axiales (331, 341) réalisent, entre les parties interne et externe (34, 33) du noyau, un couplage thermique déterminant un premier flux thermique, **en ce que** les secondes sections axiales (332, 342) réalisent, entre les parties interne et externe (34, 33) du noyau, un couplage thermique déterminant un second flux thermique, et **en ce que** le second flux est plus important que le premier flux.

18. Moule suivant l'une quelconque des revendications précédentes, **caractérisé en ce que** les outils de moulage (1, 2, 3) sont disposés l'un par rapport à l'autre avec un premier jeu maximum (Jm1), **en ce que** les outils de moulage (1, 2, 3) sont disposés par rapport aux plaques (P1 à P8) avec un second jeu maximum (Jm2), supérieur au premier jeu maximum, et **en ce que** les plaques (P1 à P8) sont régulées en température de manière à présenter entre elles une dilatation différentielle inférieure au second jeu maximum (Jm2).

19. Moule suivant l'une quelconque des revendications précédentes, **caractérisé en ce que** le passage d'injection (14) comprend un canal d'alimentation central (40) et des canaux d'alimentation radiaux (44 à 46) dont chacun s'étend depuis le canal central (40) jusqu'à une zone de raccordement (Zd1, Zd2, Zd3) à la douille (D), où ce canal radial (44 à 46) présente une largeur de raccordement (Lr1, Lr2, Lr3) et où la douille (D) présente un périmètre déterminé (Dp), et **en ce que** les largeurs de raccordement (Lr1, Lr2, Lr3) cumulées des canaux d'alimentation radiaux (44 à 46) représentent au moins 15% du périmètre déterminé (Dp) de la douille (D).

20. Moule suivant la revendication 19, **caractérisé en ce que** les largeurs de raccordement (Lr1, Lr2, Lr3) cumulées des canaux d'alimentation radiaux (44 à 46) représentent plus de 25% du périmètre déterminé (Dp) de la douille (D).

21. Moule suivant l'une quelconque des revendications 19 et 20, **caractérisé en ce que** les canaux radiaux (44 à 46) présentent une largeur qui croît, suivant une direction radiale centrifuge, jusqu'à atteindre une largeur maximale (Lr1, Lr2, Lr3) dans la zone de raccordement (Zd1, Zd2, Zd3) à la douille (D).

22. Moule suivant l'une quelconque des revendications 19 à 21 combinée à la revendication 9, **caractérisé en ce que** la cavité de moulage (K) présente une zone d'étranglement annulaire (Ze) au-delà de la zone de raccordement (Zd1, Zd2, Zd3) de chaque canal radial (44 à 46) avec la douille (D).

23. Moule suivant l'une quelconque des revendications précédentes combinée à la revendication 11, **caractérisé en ce que** chaque coulisse (11, 12), à distance du passage d'injection (14), est reliée à une surface inclinée (S1) du premier bloc (E10) de plaques, coopérant avec une surface inclinée (S2) du second bloc (E20) de plaques pour garantir une position radiale fixe de cette coulisse (11, 12) dans la position de fermeture du moule.

24. Moule suivant l'une quelconque des revendications précédentes, **caractérisé en ce que** la buse (4) comporte un obturateur (43) permettant d'interrompre un écoulement du matériau d'injection depuis la cale chaude (Q) vers le tube (T) à hauteur du canal d'injection central (40).

25. Moule suivant l'une quelconque des revendications précédentes, **caractérisé en ce que** les faces interne et externe (Ji, Je) de la jupe (J) font entre elles, dans un plan médian (M) du tube, un angle inférieur à 0.002 radians.

26. Procédé de fabrication d'un tube (T) présentant une douille de distribution (D) surmontant un col (C) qui s'évase radialement jusqu'à une jupe tubulaire souple (J) pour la mise en oeuvre du moule selon l'une des revendications précédentes, ce procédé comprenant essentiellement une phase de moulage et une phase de démoulage, la phase de moulage consistant à former le tube en injectant, à travers un canal central d'injection (40), un matériau d'injection thermoplastique en fusion dans une cavité de moulage (K) présentant un plan de joint (PJ) et au moins partiellement délimitée par un noyau (3) et une empreinte (2), la douille (D) étant moulée dans une partie de la cavité de moulage (K) qui est adjacente au passage d'injection (14), et la phase de démoulage, qui succède à la phase de moulage après solidification du matériau injecté, comprenant une opération de maintien consistant à maintenir temporairement le tube (T), une opération de dévêtissage consistant à extraire partiellement le noyau (3) du tube, une opération d'ouverture consistant à ouvrir la cavité de moulage (K), et une opération d'éjection consistant à éjecter le tube (T) de la cavité de moulage (K), l'opération d'ouverture étant consécutive à l'opération de dévêtissage et consistant à ouvrir la cavité de moulage au plan de joint (PJ), entre le col (C) et la jupe (J) du tube, **caractérisé en ce qu'**il comprend une opération d'accompagnement, concomitante à l'une au moins des opérations de dévêtissage et d'ouverture, et consistant à souffler de l'air entre le noyau et le tube.

27. Procédé de fabrication suivant la revendication 26, **caractérisé en ce que** l'opération de maintien est réalisée en maintenant le tube (T) par la douille (D) au moyen de coulisses (11, 12) préalablement placées en position mutuellement rapprochées avant l'opération de moulage, et **en ce que** cette opération de maintien se poursuit pendant l'opération d'ouverture.

28. Procédé de fabrication suivant la revendication 27, **caractérisé en ce que** l'opération d'éjection consiste à interrompre l'opération de maintien en écartant les coulisses (11, 12) l'une de l'autre, et à souffler de l'air entre les coulisses écartées et une face externe (De) de la douille (D).

29. Procédé de fabrication suivant l'une quelconque des revendications 26 à 28, **caractérisé en ce que** l'opération de maintien est interrompue avant la fin de l'opération d'ouverture.

## Patentansprüche

1. Form zum Einspritzen einer Tube (T) mit einer Verteilertülle (D), welche einen Hals (C) überragt, der sich radial bis zu einem rohrförmigen Rock erweitet und aus einem bei Raumtemperatur weichen thermoplastischen Einspritzmaterial besteht, wobei diese Form übereinander angeordnete Platten (P1 bis P8) umfasst, um eine Stapelung zu bilden (E10, E20), die sich in einer bezüglich der Platten (P1 bis P8) queren Einspritzrichtung (X1) erstreckt, von einer ersten Seite (E1) aus, wo ein Wärmeraum (Q), der das geschmolzene Einspritzmaterial enthält, angeordnet ist, bis zu einer zweiten Seite (E2), von der ersten (E1) entfernt, und Abformungswerkzeuge mit mindestens einer Düsenhalterung (1), welche an den Wärmeraum (Q) angrenzend ist und eine Düse (4) aufnimmt, deren Eingang (41) mit dem Wärmeraum (Q) verbunden ist, und deren Ausgang (42) über eine Einspritzpassage (14) mit einem Abformungshohlraum (K) verbunden ist, wobei der Kern (3) mindestens einen ersten Ansatz aufweist, welcher in einer der Einspritzrichtung (X1) entgegengesetzten Richtung (X2) durch einen Abformungszapfen (36) verlängert ist, der in dem Abdruck (2) aufgenommen ist und mit einem freigesetzten Ende (361) endet, wobei der Abformungshohlraum (K) mindestens durch die Düsenhalterung (1), den Abdruck (2) und. den Abformungszapfen (36) des Kerns (3) abgegrenzt wird und sich in der Einspritzrichtung (X1) von der Einspritzpassage (14) aus erstreckt, wobei der Kern (3)in der Stapelung der Platten mindestens durch seinen Ansatz (31) und durch das freigesetzte Ende (361) des Abformungszapfens (36) gehalten wird, und wobei die Plattenstapelung zwei Blöcke (E10, E20) umfasst, welche selektiv an einer eine Verbindung (PJ) bildenden Schnittstelle zwischen zwei Platten gegeneinander angeordnet sind, um entweder eine Öffnung oder Schließung der Form zu ermöglichen, **dadurch gekennzeichnet, dass** die Abformungswerkzeuge des Ganzen mit mindestens der Düsenhalterung (1), dem Abdruck (2) und dem Kern (3) jeweils mindestens teilweise konische und in die Einspritzrichtung (X1) gerichtete Abquetschflächenpaare (101, 102 ; 201, 202 ; 301, 302) aufweisen, dass die Abformungswerkzeuge (1, 2, 3) gegenseitig zentriert und aufeinander ausgerichtet sind, durch aus nächsten zu nächsten (1-2, 2-3, 3-1) bestehenden Werkzeugpaaren mittels einer axialen Kraft (F1+F2), welche jeweils die eine in Richtung der anderen Abquetschfläche (101, 201 ; 202, 301 ; 302, 102) der Werkzeuge jedes gebildeten Paars (1-2, 2-3, 3-1) belastet, und dass jede Abquetschfläche (101, 201, 202, 301, 302, 102) jedes Werkzeuges (1, 2, 3) jedes gebildeten Paaren (1-2, 2-3, 3-1) durch einen Teil dieses Werkzeugs gebildet ist, welches nicht in der Lage ist, sich funktionell in einer zur Einspritzrichtung (X1) queren Richtung zu bewegen.

2. Form nach Anspruch 1, **dadurch gekennzeichnet, dass** die Abquetschflächen (101, 102 ; 201, 202 ; 301, 302) durch einen zwei zu zwei Kontakt mindestens drei Schnittstellen (101-102, 202-301, 302-102) bilden, durch welche die Abformungswerkzeuge (1, 2, 3) zwei zu zwei mittig gegeneinander gestützt sind, und dass die von den Abformungswerkzeugen jeder der drei Schnittstellen (101-102, 202-301, 302-102) gebotenen Abquetschflächen (101, 102 ; 201, 202 ; 301, 302) aus den jeweiligen Ganzblockteilen dieser Abformungswerkzeuge (1, 2, 3) bestehen.

3. Form nach einem der vorangehenden Ansprüche, **dadurch gekennzeichnet, dass** die Düsenhalterung (1) und der Abdruck (2) jeweils aus einem Teil bestehen.

4. Form nach einem der vorangehenden Ansprüche, **dadurch gekennzeichnet, dass** die Verbindungsebene (PJ) sich zwischen der Düsenhalterung (1) und dem Abdruck (2) erstreckt.

5. Form nach einem der vorangehenden Ansprüche, **dadurch gekennzeichnet, dass** der Abformungszapfen (36) eine Oberflächenbeschaffenheit aufweist, die zum Erreichen einer minimalen Haftung der Tube (T) auf dem Abformungszapfen (36) nach dem Einspritzen mindestens einer Oberflächenbeschaffenheit entspricht, welche durch die Anwendung von mindestens einer der Behandlungen erreicht wird, worunter Sandstrahlung, Mikrokugelstrahlung, Laserbehandlung und chemische Behandlung.

6. Form nach einem der vorangehenden Ansprüche, **dadurch gekennzeichnet, dass** das Abquetschflächenpaar (302, 102), welches der Kern (3) und die Düsenhalterung (1) aufweisen, aus einer konkaven Abquetschfläche (30) des Kerns (3) und einer konvexen Abquetschfläche (102) der Düsenhalterung (1) besteht, wodurch die Verteilertülle (D) der Tube als eine Schale endet.

7. Form nach einem der vorangehenden Ansprüche, **dadurch gekennzeichnet, dass** die Düsenhalterung (1) geeignet ist, mindestens eine Außenseite (Ce) des Halses (C) der Tube bis zu dem Verbindungsbereich (Zc) mit dem Rock (J) zu formen.

8. Form nach einem der vorangehenden Ansprüche, **dadurch gekennzeichnet, dass** der Abformungszapfen (36) des Kerns sich von dem ersten Ansatz (31) aus erstreckt, eine Innenseite (Ji) des Rocks (J) formt und einen ihr freiliegendes Ende begrenzenden Vorsprung (362) aufweist, der geeignet ist, eine Innenseite (Ci) des Halses (C) zu formen.

9. Form nach Anspruch 8, **dadurch gekennzeichnet, dass** der Kern (3) einen äußeren Teil (33) und einen inneren Teil (34) umfasst, dass der innere Teil (31) sich längs einer der Einspritzrichtung (X1) entgegengesetzten Richtung (X2) von einem zweiten Ansatz (32) des Kerns (3) aus bis zu einer am freiliegenden Ende (361) des Abformungszapfens (36) angeordneten Spitze (343) hin erstreckt, und dass der innere Teil (34) innerhalb des äußeren Teils (33) axial gleitend zwischen einer Stützstellung, in welcher die Spitze (343) auf der Düsenhalterung (1) aufliegt und einer freigesetzten Stellung, in welcher die Spitze (343) von der Düsenhalterung (1) beabstandet ist, eingebaut ist.

10. Form nach Anspruch 9, **dadurch gekennzeichnet, dass** die Spitze (343) des inneren Teils (34) des Kerns eine Innenseite (Di) der Tülle (D) formt.

11. Form nach einem der vorangehenden Ansprüche, **dadurch gekennzeichnet, dass** Gleitstücke (11, 12) translationsbeweglich in radialen Unterbringungen (110, 120) der Düsenhalterung (1) zur Formung einer Außenseite (De) der Tülle (D) eingebaut sind.

12. Form nach Anspruch 11, **dadurch gekennzeichnet, dass** die Gleitstücke (11, 12) in geöffneter Stellung die Unterbringungen (110, 120) der Düsenhalterung (1) in welcher sie beweglich eingebaut sind, dichtend verschließen.

13. Form nach Anspruch 12, **dadurch gekennzeichnet, dass** die Gleitstücke (11, 12) zwei sind und aufeinander /0usgerichtet beidseitig der Einspritzpassage (14) angeordnet sind und quer zur Einspritzrichtung (X1), zwischen einer /0eschlossenen Stellung, in der sie sich berühren und einer /0ffenen Stellung, in der sie von einander beabstandet sind, 120/eweglich eingebaut sind, dass die Düsenhalterung (1) mit e/iner Luftleitung (13) durchbohrt ist, welche zwischen die Gleitstücke (11, 12) mündet und an eine unter Druck stehende Luftquelle (Sa) angeschlossen ist, und dass die Gleitstücke die Luftleitung (13) in ihrer geschlossenen Stellung und ihrer offenen Stellung verschließen bzw. freisetzen.

14. Form nach einem der vorangehenden Ansprüche in Verbindung mit dem Anspruch 9, **dadurch gekennzeichnet, dass** sie auf der zweiten Seite (E2) eine Hebevorrichtung (5) aufweist, welche selektiv den zweiten Ansatz (32) des Kerns bewegt und dass zur Erreichung einer mittigen Abstützung des Kerns (3) auf der Düsenhalterung (1) die Hebevorrichtung (5) den zweiten Ansatz (32) des Kerns längs einer der Einspritzrichtung (X1) entgegengesetzten Richtung (X2) bis zu einem eine Länge (34) des inneren Teils (34) des Kerns (3) bestimmenden Anschlag (B) bewegt, wodurch dieser innere Teil (34) eine vorbestimmte, elastische Komprimierung durch das Aufstützen seiner Spitze (343) auf die Düsenhalterung erfährt.

15. Form nach Anspruch 14, **dadurch gekennzeichnet, dass** die Hebevorrichtung (5) eine Hebevorrichtung mit Doppelwirkung ist, geeignet, nach der Einspritzung des Rockes der Tube selektiv den zweiten Ansatz (32) des Kerns längs der Einspritzrichtung (X1) freizusetzen, wodurch somit die Spitze (343) und die Düsenhalterung (1) von einander entfernt werden können.

16. Form nach einem der vorangehenden Ansprüche in Verbindung mit Anspruch 10, **dadurch gekennzeichnet, dass** der innere Teil (34) des Kerns von einem axialen Kanal (340) durchquert ist, in welchem eine hohle Nadel (35) aufgenommen ist, welche sich von einem in dem zweiten Ansatz (32) des Kerns angeordneten Anschlussende (353) bis zu einem im Bereich der Spritze (343) dieses inneren Teils (34) angeordneten Verteilerende (354) erstreckt, wobei das Anschlussende (353) dieser Nadel (35) je nach der Form an eine Kühlflüssigkeitsquelle (Sf) angeschlossen ist, und wobei die Nadel (35) und der axiale Kanal (340) durch einen Spalt (355) voneinander getrennt sind, wodurch der in die Nadel (35) eingespritzten Flüssigkeit ein Durchflusskanal zum Rücklauf zu dem zweiten Ansatz (32) des Kerns geboten wird.

17. Form nach einem der vorangehenden Ansprüche in Verbindung mit den Ansprüchen 9 und 10, **dadurch gekennzeichnet, dass** die inneren (34) und äußeren (33) Teile des Kerns beide erste und zweite axiale Abschnitte (331, 332 ; 341 ; 342) aufweisen, von welchen die zweiten (332, 342) relativ näher an der Spitze (343) als die ersten (331, 341) sind, dass die ersten axialen Abschnitte (331, 341) zwischen den inneren und äußeren Teilen (34, 33) des Kerns eine Wärmekoppelung herstellen, welche einen ersten Wärmefluss bestimmt, dass die zweiten axialen Abschnitte (332, 342) zwischen den inneren und Äußeren Teilen (34, 33) des Kerns eine Wärmekoppelung herstellen, welche einen zweiten Wärmefluss bestimmt, und dass der zweite Wärmefluss größer ist als der erste.

18. Form nach einem der vorangehenden Ansprüche, **dadurch gekennzeichnet, dass** die Abformungswerkzeuge (1, 2, 3) sich gegenüber mit einem ersten maximalen Spielraum (Jm1) angeordnet sind, dass die Abformungswerkzeuge (1, 2, 3) bezüglich der Platten (P1 bis P8) mit einem zweiten maximalen Spielraum (Jm2) angeordnet sind, welcher größer ist als der erste Spielraum, und dass die Platten temperaturbezogen so eingestellt sind, dass sie zwischen einander eine differentielle Ausdehnung aufweisen, welche kleiner ist als der zweite maximale Spielraum (Jm2).

19. Form nach einem der vorangehenden Ansprüche, **dadurch gekennzeichnet, dass** die Einspritzpassage (14) einen mittigen Zufuhrkanal (40) und radiale Zufuhrkanäle (44 bis 46) aufweist, von denen sich jeder von dem mittigen Kanal (40) aus bis zu einem Anschlussbereich (Zd1, Zd2, Zd3) an die Tülle (D) erstreckt, wo dieser radiale Kanal (44 bis 46) eine Anschlussbreite (Lr1, Lr2, Lr3) aufweist und wo die Tülle (D) einen bestimmten Umfang (Dp) aufweist, und dass die summierten Anschlussbreiten (Lr1, Lr2, Lr3) der radialen Zufuhrkanäle (44 bis 46) mindestens 15% des bestimmten Umfangs (Dp) der Tülle (D) darstellen.

20. Form nach Anspruch 19, **dadurch gekennzeichnet, dass** die summierten Anschlussbreiten (Lr1, Lr2, Lr3) der radialen Zufuhrkanäle (44 bis 46) mehr als 25% des bestimmten Umfangs (Dp) der Tülle (D) darstellen.

21. Form nach den Ansprüchen 19 und 20, **dadurch gekennzeichnet, dass** die radialen Kanäle (44 bis 46) eine in einer radialen, zentrifugalen Richtung zunehmende Breite aufweisen, bis sie eine maximale Breite (Lr1, Lr2, Lr3) in dem Anschlussbereich (Zd1, Zd2, Zd3) an die Tülle (D) erreichen.

22. Form nach einem der Ansprüche 19 bis 21 in Verbindung mit dem Anspruch 9, **dadurch gekennzeichnet, dass** der Abformungshohlraum (K) über dem Anschlussbereich (Zd1, Zd2, Zd3) an die Tülle (D) jedes radialen Kanals (44 bis 46) hinaus einen ringförmigen Drosselbereich (Ze) aufweist.

23. Form nach einem der vorangehenden Ansprüche in Verbindung mit Anspruch 11, **dadurch gekennzeichnet, dass** jedes von der Einspritzpassage (14) beabstandete Gleitstück (11, 12) an eine geneigte Fläche (S1) des ersten Plattenblocks (E10) angeschlossen ist, welcher mit einer geneigten Fläche (32) des zweiten Plattenblocks (E20) zusammenwirkt, um eine feststehende, radiale Stellung dieses Gleitstücks (11, 12) in geschlossener Stellung der Form zu gewährleisten.

24. Form nach einem der vorangehenden Ansprüche, **dadurch gekennzeichnet, dass** die Düse (4) einen Verschluss (43) aufweist, welcher die Unterbrechung des Ausfließens des Einspritzmaterials von dem Wärmeraum (Q) zur Tube (T) beim mittigen Einspritzkanal (40) ermöglicht.

25. Form nach einem der vorangehenden Ansprüche, **dadurch gekennzeichnet, dass** die Innen- und Außenseiten (Ji, Je) des Rocks (J) zwischen einander in einer mittigen Ebene (M) der Tube einen Winkel bilden, der kleiner als 0,002 Radiant ist.

26. Verfahren zur Herstellung einer Tube (T) mit einer Verteilertülle (D), welche einen Hals (C) überragt, der sich radial bis zu einem rohrförmigen, weichen Rock (J) erweitert, zum Einsetzen der Form nach einem der vorangehenden Ansprüche, wobei dieses Verfahren wesentlich einen Abformungsschritt und einen Abhebschritt umfasst, wobei der Abformungsschritt darin besteht, die Tube herzustellen, indem über einen mittigen Einspritzkanal (40) ein geschmolzenes thermoplastisches Einspritzmaterial in einen Abformungshohlraum (K) mit einer Verbindungsebene (PJ), welcher mindestens teilweise durch einen Kern (3) und einen Abdruck (2) abgegrenzt ist, einzuspritzen, wobei die Tülle (D) in einem Teil des Abformungshohlraums (K) geformt ist, welcher an die Einspritzpassage (14) angrenzend ist, und der Abhebschritt, welcher dem Abformungsschritt nach Aushärtung des eingespritzten Materials folgt und eine Halteoperation umfasst, die darin besteht, die Tube (T) vorläufig festzuhalten, eine Abstreifoperation, die darin besteht, den Kern (3) teilweise aus der Tube zu entfernen, eine Öffnungsoperation, die darin besteht, den Abformungshohlraum (K) zu öffnen und eine Ausstoßoperation, die darin besteht, die Tube (T) aus dem Abformungshohlraum (K) auszustoßen, wobei die Öffnungsoperation der Abstreifoperation folgt, und darin besteht, den Abformungshohlraum bei der Verbindungsebene (PJ) zwischen dem Hals (C) und dem Rock (J) der Tube zu öffnen, **dadurch gekennzeichnet, dass** es eine Begleitoperation umfasst, die gleichzeitig mit mindestens einer der Abstreif- und Öffnungsoperationen stattfindet und darin besteht, Luft zwischen den Kern und die Tube zu blasen.

27. Herstellungsverfahren nach Anspruch 26, **dadurch gekennzeichnet, dass** die Halteoperation durchgeführt wird, indem die Tube (T) an der Tülle (D) mittels der Gleitstücke (11, 12), welche im vorhinein vor der Abformungsoperation in angenäherte Stellung gebracht worden sind, festgehalten wird, und dass die Halteoperation während der Öffnungsoperation fortgeführt wird.

28. Herstellungsverfahren nach Anspruch 27, **dadurch gekennzeichnet, dass** die Ausstoßoperation darin besteht, die Halteoperation zu unterbrechen, indem die Gleitstücke (11, 12) von einander entfernt werden und Luft zwischen die beabstandeten Gleitstücke und einer Außenseite (De) der Tülle (D) geblasen wird.

29. Herstellungsverfahren nach einem der Ansprüche 26 bis 28, **dadurch gekennzeichnet, dass** die Halteoperation vor Beendung der Öffnungsoperation unterbrochen wird.

## Claims

1. Mould for injecting a tube (T) having a dispenser socket (D) surmounting a neck (C)which flares out radial fashion as far as a tubular skirt (J) and is made in a flexible thermoplastic injection material at room temperature, this mould comprising plates (P1 to P8) applied one on top of the other to form a stack (E10, E20) extending along a transverse injection direction (X1) relative to plates (P1 to P8) from a first side (E1) where a hot tank (Q) is positioned containing the molten injection material, as far as a second side (E2) distant from the first (E1), and a set of moulding tools comprising at least one nozzle receiver (1), an impression (2) and a core (3) housed in the stack of plates, the nozzle receiver (1) being adjacent to the hot tank (Q) and receiving a nozzle (4) of which an inlet (41) communicates with the hot tank (Q) and of which an outlet (42), via an injection passage (14), communicates with a moulding cavity (K), core (3) comprising at least one first base (31) extended along a reverse direction (X2) to the direction of injection (X1), by a moulding tappet (36) housed in impression (52) and ending in a free end (361), moulding cavity (K) being delimited at least by the nozzle receiver (1), impression (2) and moulding tappet (36) of the core and extending along the direction of injection (X1) from the injection passage (14), core (3) being maintained in the stack of plates at least by its base (31) and by the free end (361) of moulding tappet (36), and the stack of plates comprising two blocks (E10,E20) selectively applied against one another at an interface between two adjacent plates forming a joint plane (PJ) enabling opening or closing of the mould at will, **characterized in that** the moulding tools of the assembly comprising at least the nozzle receiver (1), impression (2) and core (3) have respective pairs of bearing surfaces (101,102; 201,202; 301,302) at least partly conical and axed along the direction of injection (X1), **in that** these moulding tools (1,2,3) are mutually centred and aligned on each other, in tool pairs formed step by step (1-2,2-3,3-1) by means of an axial force (F1+F2) drawing towards one another the respective bearing surfaces (101,201; 202,301;302,102) of the tools of each formed pair (1-2, 2-3, 3-1), and **in that** each bearing surface (101, 201, 202, 301, 302, 102) of each tool (1, 2, 3) of each formed pair (1-2, 2-3, 3-1) is formed by part of this tool which is deprived of functional mobility in transverse direction to the direction of injection (X1).

2. Mould according to claim 1, **characterized in that** the bearing surfaces (101, 102, 201,202; 301,302), via two by two contact, form at least three interfaces (101-201; 202-301, 302-102) through which the moulding tools (1,2,3) are in paired centre bearing one against the other, and **in that** the bearing surfaces (101,102; 201,202; 301,302) offered by the moulding tools to each of these three interfaces (101-201; 201-301; 302-102) are formed by respective single block parts of these moulding tools (1,2,3).

3. Mould according to any of the preceding claims, **characterized in that** the nozzle receiver (1) and impression (2) are each formed of a single piece.

4. Mould according to any of the preceding claims /00haracterized in that the joint plane (PJ) passes between the nozzle receiver (1) and the impression (2).

5. Mould according to any of the preceding claims, **characterized in that** the surface condition of moulding tappet (36), to obtain minimum adhesion of tube (T) on this moulding tappet (36) after injection, is at least equivalent to a surface condition obtained by applying at least one of the surface treatments comprising sanding, micro-beading, laser treatment and a chemical treatment.

6. Mould according to any of the preceding claims, **characterized in that** the pair of bearing surfaces (302,102) offered by the core (3) and nozzle receiver (1) is formed by a concave bearing surface (302) of core (3) and a convex bearing surface (102) of nozzle receiver (1), leading to the result that the dispenser socket (D) of the tube ends in a cup.

7. Mould according to any of the preceding claims, **characterized in that** the nozzle receiver (1) is configured to mould at least one outer surface (Ce) of neck (C) of the tube, as far as a connection zone (Zc) with skirt (J).

8. Mould according to any of the preceding claims, **characterized in that** moulding tappet (36) of the core extends from the first base (31), moulds an inner surface (J1) of skirt (J) and has a shoulder (362) bordering its free end and able to mould an inner surface (Ci) of neck (C).

9. Mould according to claim 8, **characterized in that** the core (3) comprises an outer part (33) and an inner part (34), **in that** the inner part (34) extends along a reverse direction (X2) to the direction of injection (X1) from a second base (32) of core (3) as far as a tip (343) arranged at the free end (361) of moulding tappet (36) and **in that** the inner part (34) is mounted so that it slides axially inside outer part (33) between a bearing position, in which tip (343) rests upon the nozzle receiver (1), and a cleared position in which tip (343) is distant from nozzle receiver(1).

10. Mould according to claim 9, **characterized in that** tip (343) of inner part (34) of the core moulds an inner surface (Di) of socket (D).

11. Mould according to any of the preceding claims, **characterized in that** slides (11,12) are mounted in mobile translation fashion in radial housings (110,120) of nozzle receiver (1) to mould an outer surface (De) of socket (D).

12. Mould according to claim 11, **characterized in that** slides (11,12) seal off, both in open and in closed position, housings (110,120) of nozzle receiver (1) in which they are mounted mobile fashion.

13. Mould according to claim 12, **characterized in that** slides (11, 12) total two and are arranged in the alignment of one another either side of injection passage (14) and are mounted mobile fashion, in transverse direction to the direction of injection (X1), between a closed position in which they touch one another and an open position in which they are mutually distant, **in that** nozzle receiver (1) is pierced with an air duct (13)which emerges between slides (11,12) and is connected to a pressurized air source (Sa), and **in that** the slides seal off and open the air duct (13) in their respective closed and open positions.

14. Mould according to any of the preceding claims combined with claim 9, **characterized in that**, on the second side (E2), it comprises a jack (5) selectively moving the second base (32) of the core, and **in that**, to obtain centre bearing of core (3) on nozzle receiver (1), the jack (5) moves the second base (32) of the core along a reverse direction (X2) to the direction of injection (X1) as far as a stop (B) which defines a length (L34) of the inner part (34) of core (3) for which this inner part (34) of the core undergoes a preset elastic compression by pressing its tip (343) on nozzle receiver (1).

15. Mould according to claim 14, **characterized in that** jack (5) is a twofold-effect jack able to selectively release the second base (32) from the core along the direction of injection (X1) after injection of the skirt of the tube, thereby making it possible to draw apart tip (343) and nozzle receiver (1).

16. Mould according to any of the preceding claims combined with claim 10, **characterized in that** the inner part (34) of the core is crossed by an axial channel (340) in which a hollow needle (35) is housed extending from a connection end (353) arranged in the second base (32) of the core as far as a dispenser end (354) arranged in the vicinity of tip (343) of this inner part (34), the connection end (353) of this needle (35), when the mould is in operation, being connected to a cooling liquid source (Sf), and needle (35) and axial channel (340) being separated from one another by an interstice (355) providing the fluid injected into needle (35) with a circulation route to return towards the second base (32) of the core.

17. Mould according to any of the preceding claims combined with claims 9 and 10, **characterized in that** the inner part (34) and outer part (33) of the core both have first and second axial sections (331,332;341,342) of which the second (332,342) are relatively closer to tip (343) than the first (331,341), **in that** the first axial sections (331,341), between the inner and outer parts (34,33) of the core, produce thermal coupling determining a first thermal flow, **in that** the second axial sections (332,342), between the inner and outer (34,33) parts of the core, produce thermal coupling determining a second thermal flow, and **in that** the second flow is greater than the first flow.

18. Mould according to any -of the preceding claims, **characterized in that** the moulding tools (1,2,3) are arranged relative to one another with a first maximum set (Jm1), **in that** the moulding tools (1,2,3) are arranged relative to plates (P1 to P8) with a second maximum set (Jm2), superior to the first maximum set, and **in that** plates (P1 to P8) are temperature set so that the differential dilation between them is less than that of the second maximum set (Jm2).

19. Mould according to any of the preceding claims, **characterized in that** the injection passage (14) comprises a central supply channel (40) and radial supply channels (44 to 46)of which each one extends from the central channel (40) as far as a connection zone (Zd1,Zd2,Zd3) with socket (D) where this radial channel (44 to 46) has a connection width (Lr1,Lr2,Lr3) and where socket (D) has a determined perimeter (Dp), and **in that** the accumulated connection widths (Lr1,Lr2,Lr3) of the radial supply channels (44 to 46) represent at least 15% of the determined perimeter (Dp) of socket (D).

20. Mould according to claim 19, **characterized in that** the accumulated connection widths (Lr1,Lr2,Lr3) of the radial supply channels (44 to 46) represent more than 25% of the determined perimeter (Dp) of socket (D).

21. Mould according to either of claims 19 and 20, **characterized in that** the radial channels (44 to 46) have a width which increases, along a centrifugal radial direction, until it reaches a maximum width (Lr1,Lr2,Lr3) in the connection zone (Zd1,Zd2,Zd3) with socket (D).

22. Mould according to any of claims 19 to 21 combined with claim 9 **characterized in that** mould cavity (K) has a ring-shaped throttle zone (Ze) beyond the connection zone (Zd1,Zd2,Zd3) of each radial channel (44 to 46) with socket (D).

23. Mould according to any of the preceding claims, combined with claim 11, **characterized in that** each slide (11,12) distant from the injection passage (14) is connected to an inclined surface (S1) of the first block (E10) of plates, cooperating with an inclined surface (S2) of the second block (E20) of plates to guarantee a fixed radial position of this slide (11,12) when the mould is in closed position.

24. Mould according to any of the preceding claims, **characterized in that** nozzle (4) comprises a shutter (43) making it possible to interrupt flow of the injection material from hot tank (Q) to tube (T) at the central injection channel (40).

25. Mould according to any of the preceding claims, **characterized in that** inner and outer surfaces (Ji,Je) of skirt (J), between themselves and along a median plane (M) of the tube, form an angle of less than 0.0002 radians.

26. Method for manufacturing a tube (T) having a dispenser socket (D) surmounting a neck (C) which flares out radially as far as a flexible tubular skirt (J), for use of the mould according to any of the preceding claims, this method essentially comprising a moulding phase and a mould release phase, the moulding phase consisting of forming the tube by injecting, though a central injection channel (40), a molten thermoplastic injection material into a moulding cavity (K) having a joint plane (PJ) and at least partially delimited by a core (3) and an impression (2), socket (D) being moulded in a part of moulding cavity (K) which is adjacent to injection passage(14), and the mould release phase which follows after the moulding phase after solidification of the injection material, comprising a holding operation consisting of temporarily holding tube (T), a disuniting phase consisting of partially extracting core (3) from the tube, an opening operation consisting of opening moulding cavity (K), and an ejection operation consisting of ejecting tube (T) from moulding cavity (K), the opening operation being consecutive to the disuniting operation and consisting of opening the moulding cavity at joint plane (PJ) between neck (C) and skirt (J) of the tube, **characterized in that** it comprises an accompanying operation concomitant with at least one of the disuniting an opening operations, which consists of blowing air between the core and the tube.

27. Manufacturing method according to claim 26, **characterized in that** the holding operation is made by holding tube (T) by socket (D) by means of slides (11,12) previously placed in position before the moulding operation by being drawn together, and **in that** this holding operation is continued during the opening operation.

28. Manufacturing method according to claim 27, **characterized in that** the ejection operation consists of interrupting the holding operation by drawing apart slides /0(011,12) one from the other and by blowing air between the separated slides and an outer surface (De) of socket (D).

29. Manufacturing method according to any of claims 26 to 28, **characterized in that** the holding operation is interrupted before the end of the opening operation.
